# EUROPÄISCHE PATENTSCHRIFT

(11) **EP 2 724 055 B1**
(45) Veröffentlichungstag und Bekanntmachung des Hinweises auf die Patenterteilung: **18.09.2019**
(21) Anmeldenummer: 12717294.8
(22) Anmeldetag: 26.04.2012
(51) Int. Cl.: F16H 63/36, F16H 63/30, F16H 63/48, F16D 21/04

(54) **VERRIEGELUNG EINES MEHRSTUFIGEN GETRIEBES**
LOCKING A MULTI-SPEED TRANSMISSION
VERROUILLAGE D'UNE TRANSMISSION À PLUSIEURS ÉTAGES

(30) Priorität: 24.06.2011 DE 102011078043
(43) Veröffentlichungstag der Anmeldung: 30.04.2014
(73) Patentinhaber: Robert Bosch GmbH, 70442 Stuttgart (DE)
(72) Erfinder: STUBNER, Armin, 77815 Buehl-Altschweier (DE); DOMMSCH, Hans-Peter, 77839 Lichtenau (DE); HOHL, Ulrich, 74080 Heilbronn (DE); MARTIN, Norbert, 77855 Achern (DE)
(86) Internationale Anmeldenummer: PCT/EP2012/057683
(87) Internationale Veröffentlichungsnummer: WO 2012/175240

(56) Entgegenhaltungen:
- EP-A1- 2 163 791
- WO-A1-2006/122666
- WO-A2-94/05931
- DE-A1-102007 040 040
- GB-A- 350 271

## Beschreibung

### Technisches Gebiet

Die Erfindung betrifft ein Getriebe zum Übertragen einer Rotationsenergie von einer Antriebswelle auf eine Abtriebswelle und ein Fahrzeug mit einem derartigen Getriebe.

### Stand der Technik

Getriebe werden beispielsweise in Fahrzeugen zum Wandeln einer von einem Motor ausgegebenen Rotationsenergie für einen Aktuator wie beispielsweise die Räder des Fahrzeuges verwendet. Die Umwandlung kann in der Anpassung der Drehzahl, der Drehrichtung oder anderer Kenngrößen der Rotationsenergie liegen.

Dazu weisen herkömmliche Getriebe eine Antriebswelle, die die Rotationsenergie vom Motor empfängt und eine Abtriebswelle auf, die die gewandelte Rotationsenergie an den Aktuator abgibt.

Zur Anpassung der nimmt in der Regel ein auf der Antriebswelle sitzendes Ritzel die Rotationsenergie auf und überträgt sie auf ein auf der Abtriebswelle sitzendes Zahnrad. Ritzel und Zahnrad greifen ineinander und drehen sich normalerweise unterschiedlich schnell mit einem bestimmten Übersetzungsverhältnis.

In einem mehrstufigen Getriebe sind auf der Antriebswelle unterschiedliche Ritzel und auf der Abtriebswelle unterschiedliche Zahnräder angeordnet. Für ein bestimmtes Übersetzungsverhältnis kann ein bestimmtes Ritzel und ein bestimmtes Zahnrad zum Eingriff miteinander manuell oder automatisch ausgewählt werden.

Bei einigen Anwendungen zeigt sich, dass die Rotationsenergieübertragung auch umgekehrt von der Abtriebswelle auf die Antriebswelle möglich ist, da beispielsweise ein an einem Berg abgestelltes Fahrzeug, das keine weiteren Bremsmechanismen wie beispielsweise eine Handbremse besitzt den Berg herunterrollt. Ein derartiges Fahrzeug genügt jedoch nicht den Sicherheitsbestimmungen im Straßenverkehr, da ein Fahrzeug im Stillstand neben der Handbremse von einem zweiten von der Handbremse unabhängigen Bremssystemen gehalten werden muss.

Die WO2006122666, EP2163791 und die DE 102007040040 zeigen Vorrichtungen gemäß der Gattung der unabhängigen Ansprüche.

Es ist daher Aufgabe der Erfindung, zu verhindern, dass ein Getriebe Rotationsenergie von einer Abtriebswelle auf eine Antriebswelle überträgt.

### Offenbarung der Erfindung

Die Aufgabe wird durch das Getriebe zum Übertragen einer Rotationsenergie von einer Antriebswelle auf eine Abtriebswelle gemäß Anspruch 1 sowie durch das Fahrzeug gemäß dem nebengeordneten Anspruch gelöst.

Weitere vorteilhafte Ausgestaltungen sind in den abhängigen Ansprüchen angegeben.

Gemäß der Erfindung umfasst Getriebe zum Übertragen einer Rotationsenergie von einer Antriebswelle auf eine Abtriebswelle folgende Merkmale:
- eine erste Getriebestufe mit einem ersten Antriebszahnrad auf der Antriebswelle und einem mit dem ersten Antriebszahnrad in Eingriff bringbaren ersten Abtriebszahnrad auf der Abtriebswelle; und
- eine zweite Getriebestufe mit einem zweiten Antriebszahnrad auf der Antriebswelle und einem mit dem zweiten Antriebszahnrad in Eingriff bringbaren zweiten Abtriebszahnrad auf der Abtriebswelle,
- wobei ein Übertragungsverhältnis der ersten Getriebestufe von einem 35 Übertragungsverhältnis der zweiten Getriebestufe verschieden ist.

Erfindungsgemäß umfasst das Getriebe eine Stellvorrichtung zum gleichzeitigen Einlegen der ersten Getriebestufe und der zweiten Getriebestufe vorgesehen, so dass sich die erste Getriebestufe und die zweite Getriebestufe gegenseitig verriegeln.

Dem erfindungsgemäßen Getriebe liegt der Gedanke zugrunde, dass in vielen herkömmlichen Anwendungen der an das Getriebe angeschlossene Motor keine Rotationsenergie aufnehmen konnte und daher wie eine Bremse wirkte. Neuere Anwendungen mit neueren Motorarten, wie beispielsweise ein Elektromotor, der auch als Generator wirken kann forcieren jedoch gerade die Aufnahme von Rotationsenergie durch den Motor, wie beispielsweise in einem Hybridfahrzeug, in dem Bremsenergie in einer Batterie zwischengespeichert wird. Der Motor kann in diesem Fall nicht mehr als Bremssystem verwendet werden. Der Erfindung liegt darüber hinaus der Gedanke zugrunde, dass eine Antriebswelle und eine Abtriebswelle nicht mit zwei verschiedenen Übersetzungsverhältnissen gleichzeitig gedreht werden kann. Werden somit in einem Fahrzeug gleichzeitig zwei verschiedene Gänge eingelegt, so kann sich das Fahrzeug nicht mehr fortbewegen. Eine derartige Lösung ist weitgehend kostenneutral, da alle notwendigen Elemente für die technische Umsetzung des erfindungsgemäßen Gedankens, das heißt die beiden Getriebestufen, in einem herkömmlichen Getriebe bereits vorhanden sind und nicht hinzugefügt werden brauchen. Somit sind auch herkömmliche Getriebe mit vergleichsweise wenig Aufwand erfindungsgemäß umrüstbar. Darüber hinaus ist in der das Getriebe verwendenden Anwendung, wie beispielsweise dem Fahrzeug, wenig bis kein zusätzlicher Platz notwendig, um die Erfindung zu realisieren.

Gemäß der vorliegenden Erfindung ist die Stellvorrichtung axial zur Abtriebswelle verschiebbar gelagert und somit können sequentiell verschiedene Positionen angefahren werden. Ferner umfasst das erfindungsgemäße Getriebe folgende Merkmale:
- ein erstes Verbindungselement zum formschlüssigen Verbinden des ersten Abtriebszahnrades mit der Abtriebswelle in einer Verriegelungsposition der Stellvorrichtung; und
- ein zweites Verbindungselement zum formschlüssigen Verbinden des zweiten Abtriebszahnrades mit der Abtriebswelle in der Verriegelungsposition der Stellvorrichtung.

Auf diese Weise kann eines der beiden Verbindungselemente dazu verwendet werden, die beiden Getriebestufen sequentiell zur Rotationsenergieübertragung von der Antriebswelle auf die Abtriebswelle aktivieren, in dem das Verbindungselement durch axiales Verschieben entsprechend eine formschlüssige Verbindung zwischen den entsprechenden Antriebszahnrädern und Abtriebszahnrädern herstellt. Die Verriegelungsposition kann ganz an das Ende des sequentiellen Schaltvorgangs gelegt werden, wodurch eine entsprechende Stellelementstellung solange blockiert werden kann, solange der Motor noch Rotationsenergie auf das Getriebe überträgt, um es vor Beschädigungen zu schützen.

In einer besonderen Weiterbildung ist ein mittlerer Abtriebszahnradabstand zwischen dem ersten Abtriebszahnrad und dem zweiten Abtriebszahnrad von einem mittleren Verbindungselementabstand zwischen dem ersten Verbindungselement und den zweiten Verbindungselement verschieden.

Auf diese Weise kann durch axiales Verschieben des ersten Verbindungselementes aus der Verriegelungsposition erreicht werden, dass das zweite Verbindungselement seinen Eingriff mit dem zweiten Antriebszahnrad löst und das erste Verbindungselement immer noch in das erste Antriebszahnrad eingreift, so dass die Wege zum Schalten zwischen der Verriegelungsposition und einer Position in der eine Rotationsenergieübertragung durch das Getriebe möglich ist, kurz sind.

In einer besonders bevorzugten Weiterbildung der Erfindung ist ein Innenabstand zwischen dem ersten Abtriebszahnrad und dem zweiten Abtriebszahnrad größer, als eine Dicke des ersten Verbindungselementes.

Auf diese Weise kann das erste Verbindungselement zwischen den beiden Antriebszahnrädern positioniert werden, wodurch überhaupt das Getriebe weder verriegelt noch eine Rotationsenergieübertragung möglich ist, so dass auf einfache Weise mit kurzen Schaltwegen ein Leerlauf für das Getriebe bereitgestellt ist.

Erfindungsgemäß weist das Getriebe ein drittes Verbindungselement zum formschlüssigen Verbinden des zweiten Abtriebszahnrades mit der Abtriebswelle in einer Antriebsposition der Stellvorrichtung auf, wobei das zweite Verbindungselement zwischen dem ersten Verbindungselement und dem dritten Verbindungselement angeordnet ist.

Auf diese Weise kann zwischen den Antriebspositionen der Verbindungselemente, der Neutralstellung und der Verriegelungsposition über kürzeste Schaltwege sequentiell hin und her geschaltet werden.

In einer anderen Ausbildung der Erfindung sind die Verbindungselemente Zahnräder auf der Abtriebswelle, die entsprechend zum Eingreifen in Hohlräder am ersten und zweiten Abtriebszahnrad vorgesehen sind.

Die ineinander greifenden Zahnräder und Hohlräder zum Schalten zwischen den Antriebspositionen und den Verriegelungspositionen stellen eine formschlüssige Verbindung dar und erlauben so hohe Momente zu Übertragen von der Antriebswelle auf die Abtriebswelle zu übertragen.

In einer weiteren Ausbildung der Erfindung sind die Verbindungselemente Kulissensteine, die auf der Abtriebswelle axial verschiebbar gelagert sind und entsprechend zum Eingreifen in Ausnehmungen am ersten und zweiten Abtriebszahnrad vorgesehen sind.

Auf diese Weise lässt sich die Erfindung in einem herkömmlichen Ziehkeilgetriebe umsetzen.

In einer bevorzugten Ausbildung der Erfindung umfasst die Abtriebswelle eine Rampe, auf der die Kulissensteine erhöht lagerbar sind, wenn sie in die Ausnehmungen am ersten und zweiten Abtriebszahnrad eingreifen.

In einem klassischen Ziehkeilgetriebe erfolgt die Schaltung zwischen einem auf der Abtriebswelle gelagerten Zahnrad und der Abtriebswelle über Kraftschluss. Dabei wird die Abtriebswelle an das Zahnrad über Kugeln gedrückt, wobei die Kugeln je nach ihrer Stellung in dafür vorgesehene Aussparungen des betreffenden Getriebezahnrades einrasten. Aufgrund dieses Kraftschlusses und die damit verbundenen von der Abtriebswelle aus gesehenen radialen Flächenpressungen ist das von der Antriebswelle auf die Abtriebswelle übertragbare Moment begrenzt, was bei einer robusten Auslegung des Getriebes berücksichtigt werden muss. Durch die Rampe und die damit verbundene erhöhte Lagerung des Kulissensteines kann die Schaltung zwischen dem auf der Abtriebswelle gelagerten Zahnrad und der Abtriebswelle über einen Formschluss erfolgen, der zu keinerlei radialen Flächenpressungen führt. Damit sind die übertragbaren Momente zwischen der Abtriebswelle und der Antriebswelle im Wesentlichen von der Materialfestigkeit der im Getriebe verbauten Komponenten abhängig.

In einer besonders bevorzugten Ausführung sind die Nutsteine, die Rampe und die Ausnehmungen angefast, so dass zum Anheben der Nutsteine über die Rampe und zum Eintauchen der Nutsteine in die Ausnehmung die Nutsteine lediglich in von der Abtriebswelle aus gesehen axialer Richtung verschoben werden müssen, ohne dass es weitere Aktuatoren benötigt.

Gemäß einem weiteren Aspekt der Erfindung umfasst ein Fahrzeug, insbesondere ein Elektrofahrzeug, einen Motor, Räder und ein angegebenes Getriebe, wobei der Motor mit der Antriebswelle und die Räder mit der Abtriebswelle verbunden sind, so dass ein Drehmoment vom Motor auf die Räder übertragbar ist.

### Kurzbeschreibung der Zeichnungen

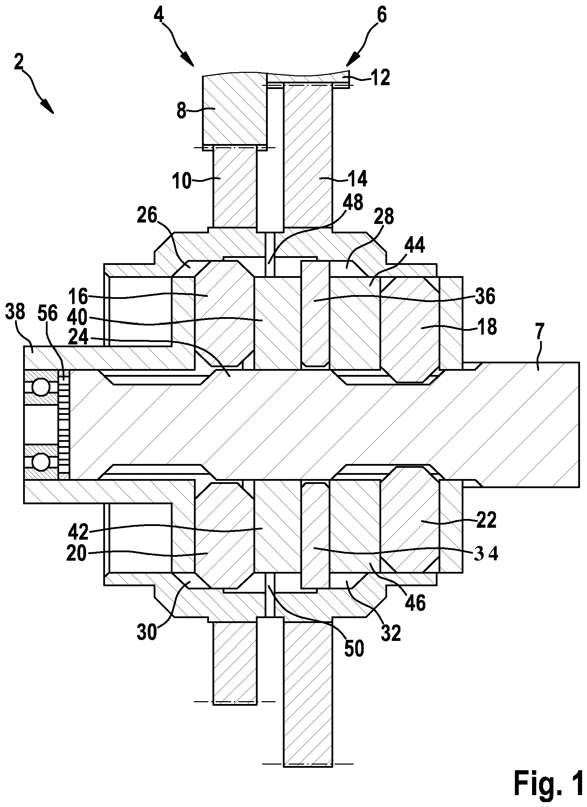

Eine bevorzugte Ausführungsform der vorliegenden Erfindung wird nachfolgend anhand der beigefügten Figur 1 näher erläutert. Es zeigen:
Figur 1 eine Schnittdarstellung eines Ziehkeilgetriebes; und
Figur 2 eine Schnittdarstellung eines Getriebes, bei welchem es sich nicht um eine Ausführungsform der Erfindung handelt.

Ausführungsform der Erfindung Figur 1 zeigt eine Schnittdarstellung eines erfindungsgemäßen Ziehkeilgetriebes 2. Das Ziehkeilgetriebe 2 besitzt eine erste Getriebestufe 4 und eine zweite Getriebestufe 6 zur Übertragung einer Rotationsenergie von einer nicht gezeigten Antriebswelle auf eine Abtriebswelle 7.

Die erste Getriebestufe 4 weist ein erstes Antriebszahnrad 8 auf, das auf der Antriebswelle gelagert ist. Das erste Antriebszahnrad 8 greift in ein erstes Abtriebszahnrad 10 ein, das auf der Abtriebswelle 7 gelagert ist. Während das erste Antriebszahnrad 8 auf der Antriebswelle drehfest gelagert ist, ist das erste Abtriebszahnrad 10 auf der Abtriebswelle 7 drehbar gelagert und muss zur Übertragung der Rotationsenergie erst in einer noch zu beschreibenden Weise drehfest mit der Abtriebswelle 7 verbunden werden. Die Übersetzungsverhältnisse zwischen dem ersten Antriebszahnrad 8 und dem ersten Abtriebszahnrad 10 beziehungsweise zwischen dem zweiten Antriebszahnrad 12 und dem zweiten Abtriebszahnrad 14 sind verschieden.

Analog zur ersten Getriebestufe 4 weist die zweite Getriebestufe 6 ein zweites Antriebszahnrad 12 auf, das auf der Antriebswelle gelagert ist. Das zweite Antriebszahnrad 12 greift in ein zweites Abtriebszahnrad 14 ein, das auf der Abtriebswelle 7 gelagert ist. Wie in der ersten Getriebestufe 4 ist das zweite Antriebszahnrad 12 auf der Antriebswelle drehfest und das zweite Abtriebszahnrad 14 auf der Abtriebswelle 7 drehbar gelagert, und muss zur Übertragung der Rotationsenergie erst drehfest mit der Abtriebswelle 7 verbunden werden.

Zur drehfesten Verbindung der Abtriebszahnräder 10, 14 mit der Abtriebswelle 7 weist das Ziehkeilgetriebe 2 vier Kulissensteine 16, 18, 20, 22 auf, die auf der Abtriebswelle 7 über eine Rampe 24 gleiten können. Die Rampe 24 lenkt die Kulissensteine 16, 18, 20, 22 von der Abtriebswelle 7 aus gesehen radial aus und führt sie in entsprechende Ausnehmungen 26, 28, 30, 32 an den Abtriebszahnrädern 10, 14 ein, um sie drehfest mit der Abtriebswelle 7 zu verbinden.

In Figur 1 befinden sich der erste Kulissenstein 6 und der dritte Kulissenstein 20 radial ausgelenkt auf der Rampe 24 und greifen entsprechend in die erste Ausnehmung 26 und die zweite Ausnehmung 30 am ersten Abtriebszahnrad 10 ein, so dass das erste Abtriebszahnrad 10 drehfest mit der Abtriebsachse verbunden ist.

Der zweite Kulissenstein 18 und der vierte Kulissenstein 22 befinden sich nicht auf der Rampe 24, greifen nicht in die entsprechende erste Ausnehmung 28 und die zweite Ausnehmung 32 am zweiten Abtriebszahnrad ein und verbinden daher das zweite Abtriebszahnrad 14 nicht drehfest mit der Abtriebswelle 7.

Um das Ziehkeilgetriebe 2 zu verriegeln und eine Übertragung von Rotationsenergie von der Antriebswelle auf die Abtriebswelle 7 zu verhindern, sind ein erster Stift 34 und ein zweiter Stift 36 vorgesehen, die durch die Rampe 24 ebenfalls radial ausgelenkt werden und in die Ausnehmungen 26, 28, 30, 32 eingreifen können. Die Kulissensteine 16, 18, 20, 22 und die Stifte 34, 36 werden in einem Ziehkeilgehäuse 38 gehalten und durch Abstandshalter 40, 42, 44, 46 voneinander getrennt. Das Ziehkeilgehäuse weist an seiner Innenseite ein nicht gezeigtes Hohlrad auf, das in eine Zahnwelle 56 auf er Abtriebswelle 7 hin- und herschiebbar ist. Durch von der Abtriebswelle 7 aus gesehenes axiales Verschieben des Ziehkeilgehäuses 38 können die Kulissensteine 16, 18, 20, 22 und die Stifte 34, 36 in die Ausnehmungen 26, 28, 30, 32 eingetaucht werden und so in diese eingreifen. Zwischen den Ausnehmungen 26, 28, 30, 32 befinden sich Freiräume 48, 50, in denen kein Eingriff zwischen den Kulissensteinen 16, 18, 20, 22 beziehungsweise den Stiften 34, 36 und den Ausnehmungen 26, 28, 30, 32 möglich ist.

Von der Abtriebswelle 7 aus gesehen in radialer Richtung weisen die Stifte 34, 36 eine geringere Dicke auf, als die Kulissensteine 16, 18, 20, 22. Auf diese Weise können die Stifte 34, 36 in den Freiräumen 48, 50 positioniert werden, während die Kulissensteine 16, 18, 20, 22 immer noch in die Ausnehmungen 26, 28, 30, 32 eingetaucht sind und so in diese eingreifen.

Im Folgenden werden vier unterschiedliche axiale Positionen des Ziehkeilgehäuses 38 diskutiert.

In der in Figur 1 gezeigten Verriegelungsposition des Ziehkeilgehäuses 38 greifen der erste und dritte Kulissenstein 16, 20 entsprechend in die erste und zweite Ausnehmung 26, 30 am ersten Abtriebszahnrad 10 ein und verbinden es drehfest mit der Abtriebswelle 7. In gleicher Weise greifen die Stifte 34, 36 in die erste und zweite Ausnehmung 28, 32 am zweiten Abtriebszahnrad 14 ein und verbinden es ebenfalls drehfest miteinander. Durch die unterschiedlichen Übersetzungsverhältnisse können die Antriebswelle und die Abtriebswelle 7 nicht mehr gedreht werden und sind blockiert.

Wird das Ziehkeilgehäuse 38 in die Zeichenebene hinein betrachtet axial nach links gezogen, so verlassen die Stifte 34, 36 die erste und zweite Ausnehmung 28, 32 am zweiten Abtriebszahnrad 14 während der erste und dritte Kulissenstein 16, 20 aufgrund ihrer von den Stiften 34, 36 verschiedenen Dicken entsprechend in der ersten und zweiten Ausnehmung 26, 30 am ersten Abtriebszahnrad 10 eingetaucht bleiben. Dadurch bleibt das erste Abtriebszahnrad 10 drehfest mit der Abtriebswelle 7 verbunden, während das zweite Abtriebszahnrad 14 nun drehbar auf der Abtriebswelle 7 gelagert ist. Nun ist eine Rotationsenergieübertragung von der Antriebswelle auf die Abtriebswelle 7 mit dem Übersetzungsverhältnis zwischen dem ersten Antriebszahnrad 8 und dem ersten Abtriebszahnrad 10 möglich.

Wird das Ziehkeilgehäuse 38 in die gleiche Richtung weiter gezogen, so erreichen die Stifte 34,36 eine Mittenposition zwischen den Ausnehmungen 26, 28, 30, 32. In der entsprechenden Positionierung des Ziehkeilgehäuses 38 sind alle Kulissensteine 16, 18, 20, 22 von der Rampe 24 heruntergeschoben, so dass kein Element im Ziehkeilgehäuse 38 in eine der Ausnehmungen 26, 28, 30, 32 eingetaucht ist. In dieser Positionierung ist keine Übertragung von Rotationsenergie möglich, gleichwohl können sich die Antriebswelle und die Abtriebswelle 7 frei bewegen. Das Getriebe 2 befindet sich im sogenannten Leerlauf.

Wird das Ziehkeilgehäuse 38 weiter gezogen, so werden der zweite Kulissenstein 18 und der vierte Kulissenstein 22 erhoben und tauchen entsprechend in die erste und zweite Ausnehmung 28, 32 am zweiten Abtriebszahnrad 14 ein.

Die Stifte 34, 36 befinden sich zu dieser Zeit immer noch in den Freiräumen 48, 50, so dass nur das zweite Abtriebszahnrad 14 drehfest mit der Abtriebswelle 7 verbunden ist und eine Rotationsenergieübertragung von der Antriebswelle auf die Abtriebswelle 7 mit dem Übersetzungsverhältnis zwischen dem zweiten Antriebszahnrad 12 und dem zweiten Abtriebszahnrad 14 ermöglicht.

Durch das Ziehen des Ziehkeilgehäuses 38 in axialer Richtung der Abtriebswelle 7 können somit sequentiell die Verriegelungsposition, die Antriebspositionen und die Leerlaufposition angefahren werden. Da die Verriegelungsposition des Ziehkeilgehäuses 38 an den äußersten Enden dieser sequentiellen Abfolge liegt, kann ihr Zugang für das Ziehkeilgetriebe 38 beispielsweise durch spezielle technische Hilfsmittel solange blockiert werden, solange größere Rotationsenergien von der Antriebswelle auf die Abtriebswelle 7 übertragen werden, um das Getriebe 2 vor einer Beschädigung durch ein schlagartiges Stoppen durch Einlegen der Verriegelungsposition zu schützen.

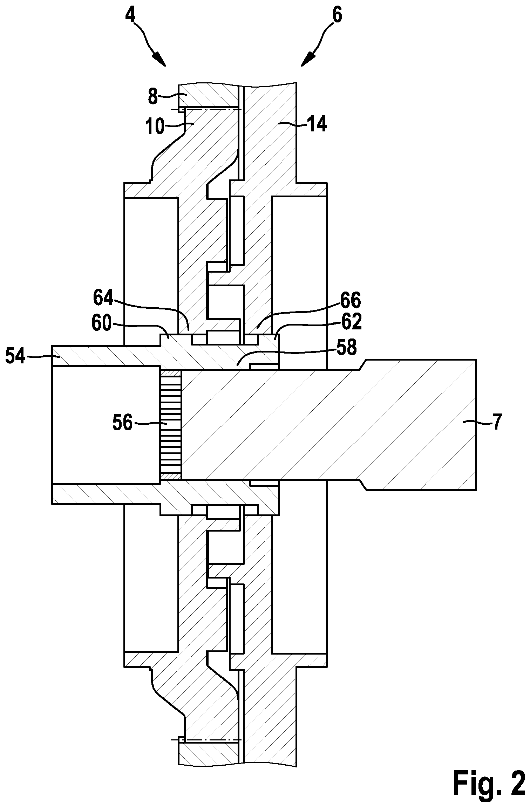

Figur 2 zeigt eine Schnittdarstellung eines Getriebes, welches keine Ausführungsform der Erfindung darstellt. In Figur 2 werden zu Figur 1 gleiche Elemente mit gleichen Bezugszeichen versehen und nicht noch einmal beschrieben.

In Figur 2 ist auf der Abtriebswelle 7 drehfest ein bezüglich der Abtriebswelle 7 axial verschiebliches hohles Schaltelement 54 gelagert. Dies kann beispielsweise dadurch umgesetzt werden, dass das Schaltelement 54 an seinem in Figur 2 gezeigten Ende eine Zahnwelle 56 aufweist, die in ein entsprechendes Hohlrad 58 an der Innenseite des Schaltelementes 54 eingreift. Am äußeren Umfang weist das Schaltelement 54 ein erstes Zwischenrad 60 und ein zweites Zwischenrad 62 mit nicht gezeigten Zähnen auf, die entsprechend in Hohlräder 64, 66 an der Innenseite der Abtriebszahnräder 10, 14 eingreifen.

Das Getriebe 52 kann analog zum Ziehkeilgetriebe 2 der Figur 1 verriegelt werden. Eine entsprechende Stellung des Schaltelementes 54 ist in Figur 2 dargestellt, in der das erste Zwischenrad 60 und das zweite Zwischenrad 62 gleichzeitig in das Hohlrad 64 des ersten Abtriebszahnrades 10 und das Hohlrad 66 des zweiten Abtriebszahnrades 14 eingreifen.

Der mittlere Abstand der beiden Zwischenräder 60, 62 ist größer als der mittlere Abstand der beiden Hohlräder 64, 66 an den beiden Abtriebsrädern 10, 14.

Durch bezüglich der Abtriebswelle 7 axiales Verschieben des Schaltelementes 54 nach rechts in die Zeichnungsebene hinein betrachtet, kann auf diese Weise der Eingriff des zweiten Zwischenrades 62 vom Hohlrad 66 des zweiten Antriebsrades 14 gelöst werden, so dass Rotationsenergie von der Antriebswelle über das erste Antriebszahnrad 8 und das erste Abtriebszahnrad 10 auf die Abtriebswelle 7 übertragen werden kann.

Wird Schaltelement 54 weiter nach rechts verschoben, wird das erste Zwischenrad 60 zwischen den beiden Hohlrädern 64, 66 positioniert, so dass sich das Getriebe im Leerlauf befindet.

Bei noch weiterem Verschieben des Schaltelementes nach rechts greift das erste Zwischenrad 60 schließlich in das Hohlrad 66 des zweiten Abtriebsrades 14 ein und ermöglicht eine Rotationsenergieübertragung von der Antriebswelle über das zweite Antriebszahnrad 12 und das zweite Abtriebszahnrad 14 auf die Abtriebswelle 7.

Erfindungsgemäß wird ein mehrstufiges Getriebe dadurch verriegelt, dass mehrere Getriebestufen gleichzeitig geschaltet werden.

## Patentansprüche

1. Getriebe zum Übertragen einer Rotationsenergie von einer Antriebswelle auf eine Abtriebswelle (7), umfassend:
- eine erste Getriebestufe (4) mit einem ersten Antriebszahnrad (8) auf der Antriebswelle und einem mit dem ersten Antriebszahnrad (8) in Eingriff stehenden ersten Abtriebszahnrad (10) auf der Abtriebswelle (7); und
- eine zweite Getriebestufe (6) mit einem zweiten Antriebszahnrad (12) auf der Antriebswelle und einem mit dem zweiten Antriebszahnrad (12) in Eingriff stehenden zweiten Abtriebszahnrad (14) auf der Abtriebswelle (7),
- wobei ein Übertragungsverhältnis der ersten Getriebestufe (4) von einem Übertragungsverhältnis der zweiten Getriebestufe (6) verschieden ist,
- eine Stellvorrichtung (38, 54) zum gleichzeitigen Einlegen der ersten Getriebestufe (4) und der zweiten Getriebestufe (6), so dass sich die erste Getriebestufe (4) und die zweite Getriebestufe (6) gegenseitig verriegeln
wobei die Stellvorrichtung (38, 54) axial zur Abtriebswelle (7) verschiebbar gelagert ist und somit sequentiell verschiedene Positionen angefahren werden können,
- ein erstes Verbindungselement (16, 60) zum formschlüssigen Verbinden des ersten Abtriebszahnrades (10) mit der Abtriebswelle (7) in einer Verriegelungsposition der Stellvorrichtung (38, 54); und
- ein zweites Verbindungselement (36, 62) zum formschlüssigen Verbinden des zweiten Abtriebszahnrades (14) mit der Abtriebswelle (7) in der Verriegelungsposition der Stellvorrichtung (38, 54),
dadurch gekennezichnet, dass
das Getriebe ein drittes Verbindungselement (18) zum formschlüssigen Verbinden des zweiten Abtriebszahnrades (14) mit der Abtriebswelle (7) in einer Antriebsposition der Stellvorrichtung (38, 54) umfasst, wobei das zweite Verbindungselement (36, 62) zwischen dem ersten Verbindungselement (16, 60) und dem dritten Verbindungselement (18) angeordnet ist.

2. Getriebe nach Anspruch 1, wobei ein mittlerer Abtriebszahnradabstand zwischen dem ersten Abtriebszahnrad (10) und dem zweiten Abtriebszahnrad (14) von einem mittleren Verbindungselementabstand zwischen dem ersten Verbindungselement (16, 60) und den zweiten Verbindungselement (36, 62) verschieden ist.

3. Getriebe nach Anspruch 1 oder 2, wobei ein Innenabstand zwischen dem ersten Abtriebszahnrad (10) und dem zweiten Abtriebszahnrad (14) größer ist, als eine Dicke des ersten Verbindungselementes (16, 60).

4. Getriebe nach einem der Ansprüche 1 bis 3, wobei die Verbindungselemente Zahnräder (60, 62) auf der Abtriebswelle (7) sind, die entsprechend zum Eingreifen in Hohlräder (64, 66) am ersten und zweiten Abtriebszahnrad (10, 14) vorgesehen sind.

5. Getriebe nach einem der Ansprüche 1 bis 3, wobei die Verbindungselemente Kulissensteine (16, 18, 36) sind, die auf der Abtriebswelle (7) axial verschiebbar gelagert sind und entsprechend zum Eingreifen in Ausnehmungen (26, 28) am ersten und zweiten Abtriebszahnrad (10, 14) vorgesehen sind.

6. Getriebe nach Anspruch 5, wobei die Abtriebswelle (7) eine Rampe (24) umfasst, auf der die Kulissensteine (16, 18, 36) erhöht lagerbar sind, wenn sie in die Ausnehmungen (26, 28) am ersten und zweiten Abtriebszahnrad (10, 14) eingreifen.

7. Getriebe nach Anspruch 6, wobei die Kulissensteine (16, 18, 36), die Rampe (24) und die Ausnehmungen (26, 28) angefast sind.

8. Fahrzeug insbesondere Elektrofahrzeug mit einem Motor, Rädern und einem Getriebe (2) nach einem der vorstehenden Ansprüche, wobei der Motor mit der Antriebswelle und die Räder mit der Abtriebswelle (7) verbunden sind, so dass ein Drehmoment vom Motor auf die Räder übertragbar ist.

## Claims

1. Transmission for the transmission of rotational energy from a drive shaft to an output shaft (7), comprising:
- a first transmission stage (4) with a first drive gearwheel (8) on the driveshaft and a first output gear wheel (10) on the output shaft (7), which first output gear wheel (10) is in engagement with the first drive gearwheel (8); and
- a second transmission stage (6) with a second drive gearwheel (12) on the drive shaft and a second output gear wheel (14) on the output shaft (7), which second output gearwheel (14) is in engagement with the second drive gearwheel (12),
- a transmission ratio of the first transmission stage (4) being different from a transmission ratio of the second transmission stage (6),
- an actuating apparatus (38, 54) for the simultaneous engagement of the first transmission stage (4) and the second transmission stage (6), with the result that the first transmission stage (4) and the second transmission stage (6) are mutually locked, the actuating apparatus (38, 54) being mounted such that it can be displaced axially with respect to the output shaft (7), and it therefore being possible for different positions to be moved to sequentially,
- a first connecting element (16, 60) for connecting the first output gearwheel (10) to the output shaft (7) in a positively locking manner in a locking position of the actuating apparatus (38, 54); and
- a second connecting element (36, 62) for connecting the second output gearwheel (14) to the output shaft (7) in a positively locking manner in the locking position of the actuating apparatus (38, 54),
**characterized in that**
the transmission comprises a third connecting element (18) for connecting the second output gear wheel (14) to the output shaft (7) in a positively locking manner in a drive position of the actuating apparatus (38, 54), the second connecting element (36, 62) being arranged between the first connecting element (16, 60) and the third connecting element (18).

2. Transmission according to Claim 1, a mean output gearwheel spacing between the first output gearwheel (10) and the second output gear wheel (14) being different from a mean connecting element spacing between the first connecting element (16, 60) and the second connecting element (36, 62).

3. Transmission according to Claim 1 or 2, an inner spacing between the first output gearwheel (10) and the second output gearwheel (14) being greater than a thickness of the first connecting element (16, 60).

4. Transmission according to one of Claims 1 to 3, the connecting elements being gearwheels (60, 62) on the output shaft (7) which are provided correspondingly for engaging into internal gears (64, 66) on the first and second output gearwheels (10, 14).

5. Transmission according to one of Claims 1 to 3, the connecting elements being sliding blocks (16, 18, 36) which are mounted such that they can be displaced axially on the output shaft (7), and are provided correspondingly for engaging into recesses (26, 28) on the first and second output gearwheels (10, 14).

6. Transmission according to Claim 5, the output shaft (7) comprising a ramp (24), on which the sliding blocks (16, 18, 36) can be mounted in an elevated manner when they engage into the recesses (26, 28) on the first and second output gearwheels (10, 14).

7. Transmission according to Claim 6, the sliding blocks (16, 18, 36), the ramp (24) and the recesses (26, 28) being bevelled.

8. Vehicle, in particular electric vehicle, having a motor, wheels and a transmission (2) according to one of the preceding claims, the motor being connected to the drive shaft and the wheels being connected to the output shaft (7), with the result that a torque can be transmitted from the motor to the wheels.

## Revendications

1. Transmission pour transmettre une énergie de rotation d'un arbre d'entraînement à un arbre de prise de force (7), comprenant :
- un premier étage de transmission (4) avec une première roue dentée d'entraînement (8) sur l'arbre d'entraînement et une première roue dentée de prise de force (10) sur l'arbre de prise de force (7), en prise avec la première roue dentée d'entraînement (8) ; et
- un deuxième étage de transmission (6) avec une deuxième roue dentée d'entraînement (12) sur l'arbre d'entraînement et une deuxième roue dentée de prise de force (14) sur l'arbre de prise de force (7), en prise avec la deuxième roue dentée d'entraînement (12),
- un rapport de transmission du premier étage de transmission (4) étant différent d'un rapport de transmission du deuxième étage de transmission (6),
- un dispositif de réglage (38, 54) pour enclencher simultanément le premier étage de transmission (4) et le deuxième étage de transmission (6), de telle sorte que le premier étage de transmission (4) et le deuxième étage de transmission (6) se verrouillent mutuellement, le dispositif de réglage (38, 54) étant supporté de manière déplaçable axialement par rapport à l'arbre de prise de force (7) et de ce fait des positions séquentiellement différentes pouvant être atteintes,
- un premier élément de connexion (16, 60) pour la connexion par engagement par correspondance de formes de la première roue dentée de prise de force (10) avec l'arbre de prise de force (7) dans une position de verrouillage du dispositif de réglage (38, 54) ; et
- un deuxième élément de connexion (36, 62) pour la connexion par engagement par correspondance de formes de la deuxième roue dentée de prise de force (14) avec l'arbre de prise de force (7) dans la position de verrouillage du dispositif de réglage (38, 54),
**caractérisée en ce que**
la transmission comprend un troisième élément de connexion (18) pour la connexion par engagement par correspondance de formes de la deuxième roue dentée de prise de force (14) avec l'arbre de prise de force (7) dans une position d'entraînement du dispositif de réglage (38, 54), le deuxième élément de connexion (36, 62) étant disposé entre le premier élément de connexion (16, 60) et le troisième élément de connexion (18).

2. Transmission selon la revendication 1, dans laquelle une distance de roue dentée de prise de force moyenne entre la première roue dentée de prise de force (10) et la deuxième roue dentée de prise de force (14) est différente d'une distance d'élément de connexion moyenne entre le premier élément de connexion (16, 60) et le deuxième élément de connexion (36, 62).

3. Transmission selon la revendication 1 ou 2, dans laquelle une distance intérieure entre la première roue dentée de prise de force (10) et la deuxième roue dentée de prise de force (14) est supérieure à une épaisseur du premier élément de connexion (16, 60).

4. Transmission selon l'une quelconque des revendications 1 à 3, dans laquelle les éléments de connexion sont des roues dentées (60, 62) sur l'arbre de prise de force (7), qui sont prévues de manière correspondante pour l'engagement dans des couronnes dentées (64, 66) sur la première et la deuxième roue dentée de prise de force (10, 14).

5. Transmission selon l'une quelconque des revendications 1 à 3, dans laquelle les éléments de connexion sont des coulisseaux (16, 18, 36) qui sont supportés de manière déplaçable axialement sur l'arbre de prise de force (7) et qui sont prévus de manière correspondante pour l'engagement dans des évidements (26, 28) sur la première et la deuxième roue dentée de prise de force (10, 14).

6. Transmission selon la revendication 5, dans laquelle l'arbre de prise de force (7) comprend une rampe (24) sur laquelle les coulisseaux (16, 18, 36) peuvent être supportés de manière rehaussée lorsqu'ils s'engagent dans les évidements (26, 28) sur la première et la deuxième roue dentée de prise de force (10, 14).

7. Transmission selon la revendication 6, dans laquelle les coulisseaux (16, 18, 36), la rampe (24) et les évidements (26, 28) sont biseautés.

8. Véhicule, en particulier véhicule électrique comprenant un moteur, des roues et une transmission (2) selon l'une quelconque des revendications précédentes, le moteur étant connecté à l'arbre d'entraînement et les roues étant connectées à l'arbre de prise de force (7), de telle sorte qu'un couple puisse être transmis du moteur aux roues.
